# EUROPEAN PATENT APPLICATION

(11) **EP 1 753 101 A1**
(43) Date of publication of application: **14.02.2007**
(21) Application number: 06016514.9
(22) Date of filing: 08.08.2006
(51) Int. Cl.: H01S 3/10, G02B 5/28

(54) **Gain flattening filter for preserving the spectral bandwidth in cryogenic ultrashort-pulse laser amplifiers**

(30) Priority: 08.08.2005 US 706389 P
(71) Applicant: The Regents of the University of Colorado, Boulder, CO 80309-0588 (US)
(72) Inventor: Backus, Sterling J., 80516 Erie (US); Kapteyn, Henry C., 80304 Boulder (US)
(74) Representative: Duhme, Torsten

(57) **Abstract**

A gain flattening filter (122) preserves very broad bandwidth, and therefore very short-duration pulses in ultrafast cryogenically-cooled (112) laser amplifier systems (100), while also maintaining good overall efficiency. The filter is optimized for pulses amplified in a cryogenically cooled material (114).

## Description

### BACKGROUND OF THE INVENTION

This application claims the benefit of U.S. Provisional Patent Application No. 60/706389, filed August 8, 2005.

### FIELD OF THE INVENTION:

This invention relates to gain flattening filters for use in laser amplifiers. In particular, this invention relates to gain flattening filters optimized for use in cryogenic ultrashort-pulse laser amplifiers.

### DESCRIPTION OF RELATED ART:

Gain narrowing has long been recognized as a problem in amplifiers where the beam passes through the amplifying medium multiple times (e.g. multipass configurations and regenerative configurations). Both multipass and regenerative amplifiers pass the beam being amplified through the gain material a number of times, in order to achieve sufficient amplification. Since gain follows a generally bell-shaped curve, the repeated passes result not just in increased power, but also in narrowed gain profile. Since the pulse duration and spectral bandwidth have an inverse relationship, spectral narrowing corresponds to longer-duration pulses, which is generally undesirable.

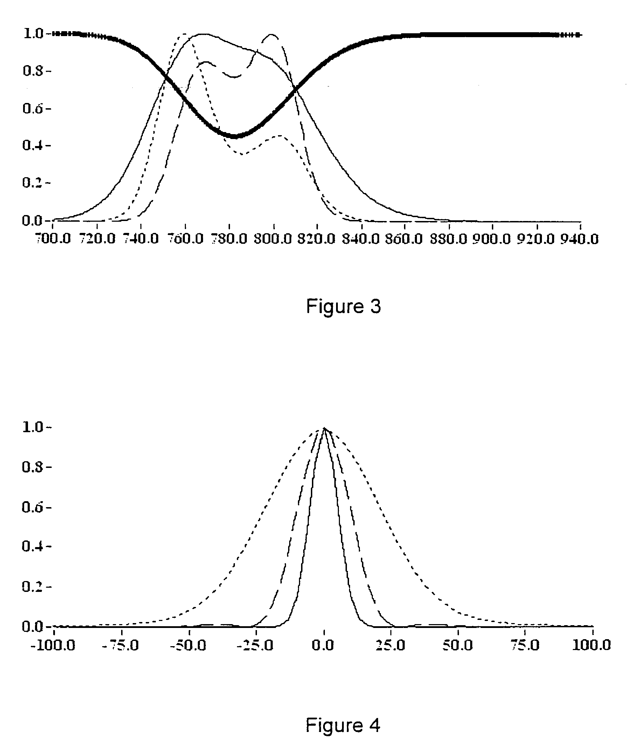

Gain-flattening etalons and other types of filters have been used in the past in room temperature regenerative [4] and multipass amplifiers [3, 5]. The resulting gain shape achieved is not ideal however, as it is not flat but rather a double peak shape or else exhibits "hard edges" on the spectrum. See, for example, Figure 4 in reference [6], wherein the double peak has completely suppressed the gain at 800 nm, the center frequency of the input pulse.

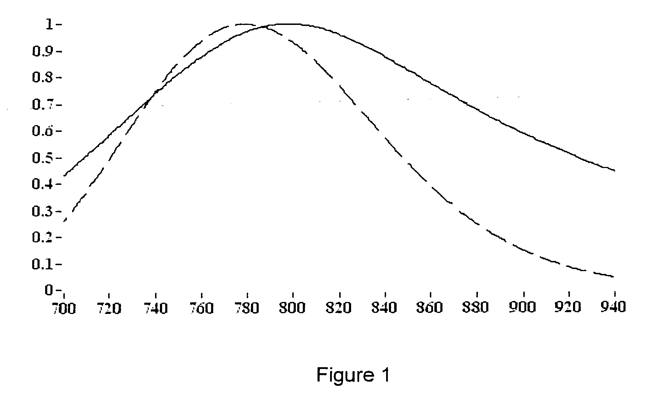

In past work, the present inventors have demonstrated the utility of cryogenic cooling for improving the average power available from an ultrafast laser amplifier system. [1, 2] However, in this work one difficulty is that when the ti:sapphire or the like is cryogenically cooled, changes in the gain spectrum of the material result in a further narrowing of the output spectral bandwidth from the amplifier, beyond the inevitable narrowing in multipass and regenerative configurations discussed above. The spectrum also shifts at cryogenic temperatures. Figure 1 shows the effect on gain spectrum determined by the inventors. The solid line shows the gain spectrum of a room temperature (300 K) ti:sapphire amplifier system, while the dashed line shows the gain spectrum of a cryogenically cooled (70 K) Ti:sapphire amplifier system. In the cryo cooled system, the gain spectrum is both shifted and narrowed. Since the pulse duration and spectral bandwidth have an inverse relationship, spectral narrowing corresponds to longer-duration pulses, which is generally undesirable. Whereas in past work with uncooled ti:sapphire pulse spectral bandwidths of >80 nm and pulse duration as short as 15 fs were obtained [3], initial efforts using cryogenically-cooled amplifiers yielded bandwidths of <40 nm FWHM and pulse durations of 30-40 fs.

Hence a problem with cryogenically cooled ultrafast laser amplifier systems, especially multipass amplifiers, is a shift in the gain spectrum of ti:sapphire at cryogenic temperatures, along with a narrowing of the gain profile above and beyond the narrowing that occurs in room temperature systems. The conventional gain-flattening filter designs implemented for room temperature operation of ti:sapphire amplifiers do not work well at cryogenic temperatures. While the present inventors are experts in the field of cryogenically-cooled amplifiers, they were surprised by the poor performance of conventional filters in cryogenically-cooled amplifiers. Even though the shift in gain cross section of ti:sapphire with temperature is a rather small effect, and it was not expected that changes to the filter would be required to effectively use the filter at cryo temperatures, it turns out to be quite critical. Optimizing filters (and other elements of the amplifier) for use in cryogenically-cooled amplifiers was not intuitive and required a difficult iterative process, and even adjusting the temperature of the laser medium in order to match the profile obtained for the optimized filter.

A need remains in the art for a gain-flattening filter optimized for use in cryogenically-cooled ultrafast laser amplifier systems.

### Bibliography

[1] S. Backus, R. Bartels, S. Thompson, R. Dollinger, H. C. Kapteyn, and M. M. Murnane, "High-efficiency, single-stage 7-kHz high-average-power ultrafast laser system," Optics Letters, vol. 26, pp. 465-467, 2001.
[2] S. J. Backus, H. C. Kapteyn, and M. M. Murnane, "Ultrashort pulse amplification in cryogenically cooled amplifiers." USA Patent number 6,804,287: Regents of the University of Colorado, 2004.
[3] E. Zeek, R. Bartels, M. M. Murnane, H. C. Kapteyn, S. Backus, and G. Vdovin, "Adaptive pulse compression for transform-limited 15-fs high- energy pulse generation," Optics Letters, vol. 25, pp. 587-589, 2000.
[4] C. Barty, T. Guo, C. Le Blanc, F. Raksi, C. Rose-Petruck, J. Squier, K. Wilson, V. Yakovlev, and K. Yamakawa, "Generation of 18-fs, multiterawatt pulses by regenerative pulse shaping and chirped-pulse amplification," Optics Letters, vol. 21, pp. 668-70, 1996.
[5] Z. Cheng, F. Krausz, and C. Spielmann, "Compression of 2 mJ kilohertz laser pulses to 17.5 fs by pairing double-prism compressor: analysis and performance," Optics Communications, vol. 201, pp. 145-155, 2002.
[6] Takada et al, "Broadband Regenerative Amplifier Using a Gain-Narrowing Compensator with Multiple Dielectric Layers," Japanese Journal of Applied Optics, vol. 43, no. 11 B, pp. L1485-L1487.

### SUMMARY:

It is an object of the present invention to provide a gain-flattening filter for use in cryogenically-cooled ultrafast laser amplifier systems.

The present invention solves this problem (wherein changes in the gain spectrum of the material at cryogenic temperatures result in a shifting, reshaping, and narrowing of the output spectral bandwidth from the amplifier, and a corresponding longer-duration pulse) using a specially designed spectral "gain flattening" filter, optimized specifically for the case of the cryogenically-cooled crystal, to maintain spectral bandwidth in the laser amplifier system.

In the case of a custom-designed filter, the shift in and narrowing of the gain cross section of ti:sapphire with temperature is a rather small effect, but it turns out to be quite critical. The conventional gain-flattening filter design implemented for room temperature operation of ti:sapphire amplifiers does not work well at cryogenic temperatures, while the filter designed for cryogenic operation according to the present invention does not work at room temperatures. Overall the gain-flattening filter works much better and with much more repeatability in the cryo-cooled situation.

The resulting optimum design, in the case of ti:sapphire cooled to cryogenic temperatures, corresponds to a spectral filter that transmits 40-50% of the light at the peak attenuation wavelength of 770-785 nm, and a FWHM of the gain-flattening filter of -75 nm

A preferred embodiment of the present invention uses a "multipass amplifier" configuration, wherein the pulses do not retrace exactly the same path through the laser crystal for many passes, but rather shift slightly for each pass until the final pass intersects a mirror, which removes the pulse from the amplifier for use as an output pulse. As a feature, the ultimate system output can be further optimized in a multipass configuration by inserting the spectral filter into the beam path for a variable number of passes. Causing the filter to intersect the beam for the first several passes but bypass it for the final several passes increases system gain and improves pulse shape.

The present invention finds its immediate usefulness in ultrashort-pulse ti:sapphire laser amplifiers. The typical operating parameters require on the order of 10 passes through the crystal in a multipass amplifier. An ultrafast laser amplifier system takes an ultrashort light pulse, "stretches" it in time, then puts the beam through an amplifier that typically requires 8-20 passes through a laser crystal to increase the pulse energy from ~10⁻⁹ Joules to ~10⁻³ J or higher and then is recompressed in a pulse compressor.

### BRIEF DESCRIPTION OF THE DRAWINGS

Figure 1 (Prior Art) is a plot showing the effect of changing temperature on gain spectrum in a ti:sapphire amplifier system.
Figure 2 is a diagram of a preferred embodiment of of a cryogenically cooled ultrafast ti:sapphire laser amplifier using a gain flattening filter according to the present invention.
Figure 3 is a plot illustrating the effect of the gain flattening filter of Figure 2 on pulse spectrum.
Figure 4 is a plot illustrating the effect of the gain flattening filter of Figure 2 on the time duration of the pulse.
Figure 5 is a plot illustrating actual measured spectrum data from a cryo cooled amplifier as shown in Figure 2.
Figure 6 is a plot showing an actual measured temporal pulse from a cryo cooled amplifier as shown in Figure 2.
Figure 7 is a top plan view, a side view, and an end view of an embodiment of a gain flattening filter according to the present invention.
Figure 8 is a plot showing a theoretical gain-flattening filter designed for the cryo amplifier of Figure 2, and an actual filter that was built.

### DETAILED DESCRIPTION

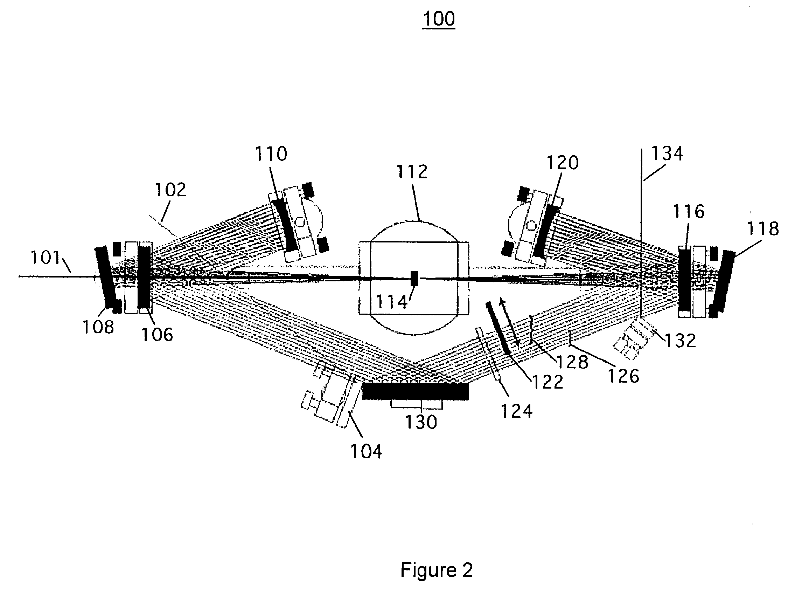

Figure 2 is a block diagram of a preferred embodiment of a cryogenically cooled ultrafast ti:sapphire laser amplifier 100 using a gain flattening filter 122. The embodiment of Figure 2 is a "multipass" amplifier configuration, wherein the beam shifts slightly in path with each pass, which allows the inclusion of an optional feature wherein filter 122 intersects the beam path for a variable number of passes - i.e. it intersects the first several passes 128, but the last several passes 126 bypass the filter. The final pass intersects output mirror 132 and is diverted out of the amplifier as output pulse 134.

Ultrafast laser amplifier system 100 takes an ultrashort light pulse 102, "stretches" it in time, then puts the beam through an amplification process that typically requires 8-20 passes through a laser crystal 114 to increase the output pulse 134 energy from ~10⁻⁹ Joules to ~10⁻³ J or higher. Pump beam 101 enters the system at the right in Figure 2.

Input beam 102 reflects off of flat mirror 104 and into the amplifier. The beam rings around the amplifier as half flat mirrors 106 and 116 send some of the light through the laser material 114, and allow some to reflect off flat mirrors 108 and 118 (and flat mirror 130) and curved mirrors 110 and 120. Optional mask 124 prevents ASE from forming in the amplifier.

In the multipass configuration of Figure 2, and in similar configurations, there is a region of propagation (for example, areas between mirror 110 and mirror 120 in this embodiment) in the amplifier ring where the beams all travel in parallel, but are displaced from each other horizontally. As an option, spectral filter 122 may be mounted in this region such that early passes pass through the filter and later passes bypass it, as shown in Figure 2. Filter 122 can be translated (offline) perpendicular to the beam in order to vary the number of passes through the filter. The exact number of passes for which the spectral filter is used can be adjusted to obtain minimum pulse duration while avoiding double peak spectra or other undesirable characteristics, and also maintaining optimum energy extraction from the laser.

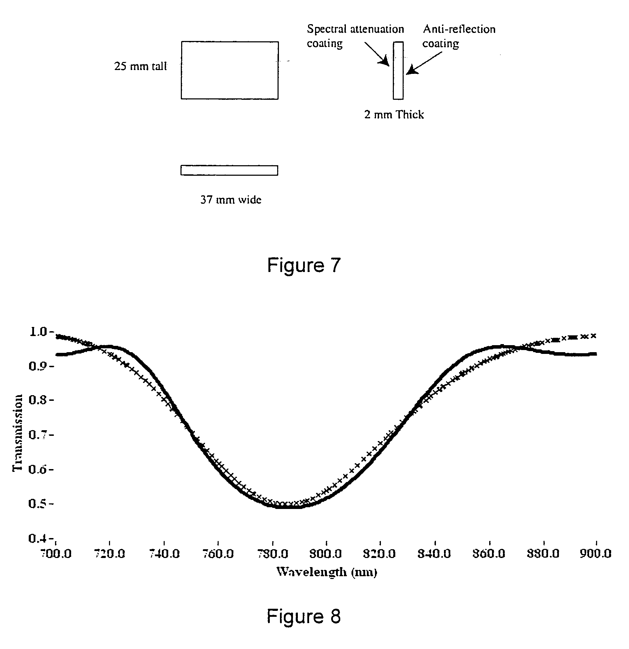

Conventional gain flattening filters include a mounting frame that would obscure the beam if someone attempted to use them in this way. In addition, in conventional filters the layer structure does not extend to the edge. Therefore, if filter 122 is to be used in this manner as shown in Figure 2, it preferably is constructed such that the layer structure (see Figure 7) extends all the way to at least one edge of the optic, and without a frame at that edge which would block light (for example the filter might be glued to a support at the bottom and the filter structure extend to one side edge, with the beam walking off that side edge.).

The physical reason for having filter 122 intersect only the earlier passes is 1) loss in the gain flattening filter, and 2) gain saturation. The gain-flattening filter is lossy, reflecting some of the light out of the path of the multipass amplifier. This affects the overall efficiency of the amplifier; however, this loss is most significant in the final passes through the amplifier, when the pulse energy is highest. The amount of energy lost from the amplifier with each pass through the filter depends on the spectral shape, but is somewhere in the range of ~20% in the case of the filter design of Figure 1. With a typical small-signal gain per pass of ~5x, a pulse of 10⁻⁹ Joules energy would be amplified to 5x10⁻⁹ J after one pass. A loss of 20% in the gain flattening filter would reduce this energy by ~10⁻⁹ Joules, and the gain to an average of 4x. The energy loss at this point is insignificant. The gain is reduced, and thus a somewhat greater number of passes would be required to obtain a given pulse energy. In the small signal limit, for example, a total small-signal gain of 10⁶ would be obtained in log(10⁶)/log(5)=8-9 passes without the filter, but ~log(10⁶)/log(4)=10 passes with the filter. However, since the net gain (i.e. the product of the gain from the laser crystal, and the loss from the filter) is flat over a broader bandwidth. Thus the amplification process does not narrow the spectrum of the pulse, making it possible to retain the shortest possible pulse duration after the amplification process. In-fact, the gain-flattening filter may cause spectral "gain broadening" rather than gain narrowing, depending on the relative gain and loss.

However, at some point the amplifier pulse energy begins to reach saturation, where the pulse amplification process is extracting a significant fraction of the energy stored in the laser crystal. For example, in our typical configuration we "pump" the ti:sapphire laser crystal with ~10 mJ of absorbed energy, with the pump laser wavelength of 532 nm. The total exactable energy is ~10 mJ*(532 nm)/(800 nm) ≈ 6-7 mJ. Once the pulse has extracted a significant fraction of this stored energy, the gain per pass begins to decrease. If the pulse then also passes through the gain-flattening filter, there are two problems: 1) with a lower overall gain in the laser crystal, the spectral filter overcompensates for the gain curve, making a broad but non-ideal spectral shape; and 2) the loss from the filter becomes significant in terms of overall energy loss from the pulse; i.e. when the pulse has -5 mJ energy a 20% loss is ~1 mJ, and this loss is unrecoverable since the gain in the amplifier has become depleted.

The optimum solution is to insert the gain flattening filter for the initial passes through the multipass amplifier, while the final passes, once the pulse energy is reaching saturation, do not make use of the filter. In this way, the gain flattening filter can be matched to the small signal gain characteristics of the amplifier, to maintain or moderately broaden the spectrum of the pulse in these initial passes. In passes that are nearing saturation, the spectral filter is not there, and does not result in any loss of pulse energy and amplifier efficiency. Furthermore, some gain-narrowing can serve to spectrally-reshape the "square" pulse spectrum resulting from the initial passes, resulting in a more nearly ideal spectrum (which in the case where a short pulse duration is required, corresponds to a approximately Gaussian-shape spectrum). Specifically, varying the number of passes allows for the filter to start to broaden the spectrum as gain saturation causes the filter to overcompensate and start to form a broad "double peak" spectrum. Subsequent passes that do not go through the filter can then reshape the double peak to fill-in the hole, creating a more nearly ideal spectrum. Adjustment of the number of passes is critical to getting the optimum spectral shape, and this has not been done before. Changing the number of passes in which the spectral filter is used is simply a matter of translating the spectral filter in the case of Figure 2, however different schemes for varying the number of passes can be employed, as can different designs of spectral filter (for example, where the spectral filter coating is applied to only part of the substrate, such that all passes travel through the substrate but only some through the filter). Another alternative would be to have different design spectral filters for successive passes. It should also be pointed out that the variable number of passes scheme also allows for a greater manufacturing tolerance in the exact shape of the spectral gain-flattening filter, and in the gain per pass implemented in the setup. Since these filters are difficult to manufacture with an exact depth, shape, and center frequency of modulation, a means of adjusting performance is important for manufacturing consistency. It also allows for the pump pulse energy to be varied over a significant range without needing to change the spectral filter.

Figure 3 is a plot illustrating the effect of the gain flattening filter of Figure 2 on pulse spectrum (amplification is not shown). Gain flattening filter 122 intersects the first seven passes 128 of cryogenic Ti:sapphire amplifier system 100. The last five passes bypass filter 122. The thick black curve is the filter transmission (ideal) of filter 122, the solid line is the spectrum after the first pass, the short dashed line is the spectrum after the seventh pass, and the long dash is the spectrum of the output pulse 134, after twelve passes (seven intersecting passes 128 and five bypassing passes 126). The output spectrum is 55 nm FWHM which gives a 22 fs pulse assuming no phase distortion (or correction of the phase distortion using a variety of pulse shaping techniques). The blue shifted spectrum is caused by a blue shift in the cryogenically cooled amplifier, and a gain spectral narrowing is also observed. This leads to a narrower output spectrum compared to the room temperature case. However, with the cryo cooled amplifier, the thermal lensing is greatly reduced (1 cm @ 300 K, to 5 m @ 70 K), allowing multiple passes through the amplifier without distortion of the beam. This required fine tuning and many runs to adapt the filter design for cryo-cooled amplifiers. The critical parameters are depth, width, and spectral center wavelength. Also the wings of the filter must be under 5% modulation. See Figure 7 and associated text. Exhibiting minimum (i.e. under 5%) oscillations in the transmission spectrum in the regions away from the spectral peak avoids limiting gain at short or long wavelengths and thus creating a "hard edge" spectrum.

Figure 4 is a plot illustrating the effect of gain flattening filter 122 on temporal pulse shape in system 100. The solid line is the input pulse 102 (12 fs). The short dashed line is a cryo-cooled pulse after twelve passes, with no filter 122 in the system (50 fs). The long dashed line is the cryo-cooled system with filter 122 in place (22 fs). Again gain flattening filter 122 intersects the first seven passes 128 of cryogenic Ti:sapphire amplifier system 100 and the last five passes bypass filter 122. Note that the filter significantly shortens the temporal pulse, compared to the system without a filter.

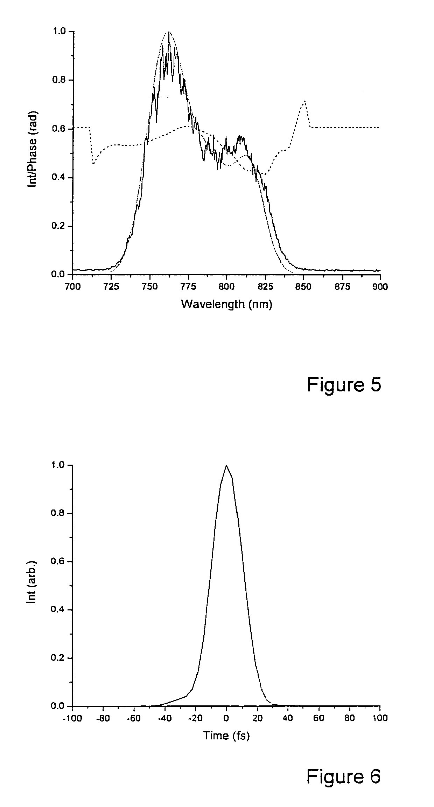

Figure 5 is a plot illustrating actual measured spectrum data from cryo cooled amplifier 100 as shown in Figure 2, in this case a 6 mJ, 5 kHz amplifier system. Again gain flattening filter 122 intersects the first seven passes 128 of cryogenic Ti:sapphire amplifier system 100 and the last five passes bypass filter 122. FWHM is 55 nm, giving a 23 fs pulse. The solid (jagged) line is the measured spectrum of output pulse 134. The short dashed line (curved) is calculated spectrum, and dotted line is spectral phase of the pulse. This figures illustrates that actual results closely mirror calculated results, and that the filter does not affect the spectral phase of the system enough to prevent compressing the pulses to a short duration.

Figure 6 is a plot showing an actual measured temporal pulse 134 from cryo cooled amplifier 100 as shown in Figures 2 and 5 (obtained using the frequency-resolved gating (FROG) technique). Note the 23 fs FWHM pulse closely mirrors the calculated temporal pulse in Figure 4.

Figure 7 illustrates a specially designed spectral "gain flattening" filter 122, optimized specifically for the case of the cryogenically-cooled crystal 114, to maintain spectral bandwidth in the laser amplifier system 100. Although various designs of spectral gain-flattening filters for room temperature ultrafast laser amplifier systems have been discussed and implemented in the past, there has been no published data on the gain at low temperature and no discussion of designing a spectral filter specifically for the case of a cryogenically cooled laser amplifier system. Development of this design required careful measurement of the gain spectrum in the specific case of the cryo-cooled system, and then an iterative design process, where gain-flattening filters with various spectral characteristics were fabricated using standard thin-film deposition techniques, put into the laser amplifier and evaluated. Based on these experimental data, the design was modified. The resulting optimum design, in the case for ti:sapphire cooled to cryogenic temperature, corresponds to a spectral filter that transmits 40-50% of the light at the peak attenuation wavelength of 770-785 nm, and a FWHM of the gain-flattening filter of~75 nm. The gain flattener profile is both shifted and narrowed compared with what would be ideal for the non-cryocooled case. The shift in the gain profile is easier to appreciate than the adjustment of the width, but the width is equally important. The exact shape of this gain-flattening filter can be optimized both for the material used, for the temperature at which the laser medium is operating, and also for the gain per pass in the laser crystal for the particular optical amplifier configuration used. This gain-flattening filter was implemented using a transmissive optic, but the filter itself could also be implemented in a reflective mode

Figure 7 is a top plan view 702, a side view 704, and an end view 706 of a gain flattening filter 122. The anti-reflection coating 710 is for broad band light centered around the gain center of the cryo-cooled amplifier (about 770 nm). The spectral attenuation coating 708 is the gain flattening filter coating design. Coating 708 comprises 9 layers each of SiO₂, and HfO₂, whose thickness is about ¼ wavelength, or about 200nm, but is preferably numerically optimized to match the desired transmission curve (see table 1 for an example). SiO₂ and TiO₂ may alternatively be used, but at a reduced damage threshold (see table 2).

Note that an iterative, trial and error process was needed to produce filters that have the desired gain broadening effect. Relatively small errors can make the filter useless, or even cause gain narrowing. For example, filter wings must be within about 5% modulation or less for good performance.

Figure 8 is a plot showing a theoretical gain-flattening filter designed for the cryo amplifier of Figure 2, and an actual filter 122 that was built.

An actual produced filter 122 was formed in layers on a fused silica substrate. The heavy line is the filter actually made, and the line formed of x's denotes the theoretical desired filter profile. This filter was used to produce the data in Figure 5. Shown is HfO₂, SiO₂ (Halfnium dioxide, and Silicon dioxide). Table 1 shows the layer position, and thickness for the HfO₂/SiO₂ Design. Note that layer 1 is closest to the substrate

**Table 1. HfO₂/SiO₂ filter design used in measured data (Figure 5). HfO₂/SiO₂ used for high damage threshold applications. Again, layer 1 is the layer closest to the substrate.**

| Layer | Material | Thickness (nm) |
|---|---|---|
| 1 | HfO₂ | 157.37 |
| 2 | SiO₂ | 331.27 |
| 3 | HfO₂ | 432.75 |
| 4 | SiO₂ | 227.72 |
| 5 | HfO₂ | 91.39 |
| 6 | SiO₂ | 387.83 |
| 7 | HfO₂ | 193.20 |
| 8 | SiO₂ | 179.75 |
| 9 | HfO₂ | 163.19 |

**Table 2. TiO₂/SiO₂ alternate filter design which may be used for lower damage threshold applications.**

| Layer | Material | Thickness (nm) |
|---|---|---|
| 1 | TiO₂ | 153.09 |
| 2 | SiO₂ | 320.99 |
| 3 | TiO₂ | 368.68 |
| 4 | SiO₂ | 247.97 |
| 5 | TiO₂ | 82.36 |
| 6 | SiO₂ | 368.87 |
| 7 | TiO₂ | 167.52 |
| 8 | SiO₂ | 195.72 |
| 9 | TiO₂ | 148.79 |

While the exemplary preferred embodiments of the present invention are described herein with particularity, those skilled in the art will appreciate various changes, additions, and applications other than those specifically mentioned, which are within the spirit of this invention. For example, variations in the design of the gain flattening filter can produce a similar transmission (or reflection) characteristics. Filters could also be positioned so that for each pass through the laser medium, the beam passes through the filter more than once, with the cumulative effect of the filter reflections (or transmissions) obtaining a similar gain-flattening effect.

## Claims

1. A gain-flattening filter (122) for maintaining spectral bandwidth in laser amplifier systems (100) utilizing cryogenically (112) cooled gain material (114), the filter comprising:
a substrate; and
a plurality of approximately quarter-wave alternating layers of high index and low index materials formed on the substrate;
wherein the thickness of the layers is optimized to maintain spectral bandwidth of laser pulses amplified at cryogenic temperatures.

2. The filter of claim 1 wherein the layers comprise SiO₂ and HfO₂.

3. The filter of claim 1 wherein the layers comprises SiO₂ and TiO₂.

4. The filter of claim 1 wherein the alternating layers comprise approximately 9 layers of high index and low index materials each.

5. The filter of claim 1 wherein the gain attenuation spectrum is centered at about 770 nm and the gain material is Ti:sapphire.

6. The filter of claim 1 wherein the thickness of the alternating layers is optimized to provide 5% modulation or less outside the central gain flattening peak.

7. The filter of claim 6 wherein at the center of the attenuation spectrum, approximately 40% of light is transmitted.

8. The filter of claim 6 having a spectral width at half the maximum attenuation of around 75 nm

9. A multipass laser amplifier system of the type comprising means for introducing a pump laser beam, a gain material, means for energizing the gain material, mirrors for circulating the pulses around the amplifier several times, and means for removing a laser pulse from the amplifier, the improvements comprising:
(a) a cryogenic chamber for maintaining the gain material at a cryogenic temperature; and
(b) the gain flattening filter of claim 1.

10. The amplifier of claim 9 wherein the mirrors and the filter are constructed and arranged to allow the laser pulse to pass through the filter for several passes and then to bypass the filter for several passes.

11. The method of preserving spectral bandwidth in a cryogenic ultrashort-pulse laser amplifier having a gain material comprising the steps of:
energizing the gain material;
cryogenically cooling the gain material;
introducing an input pulse beam into the amplifier;
optimizing a gain flattening filter to maintain the spectral bandwidth of the pulse beam at cryogenic temperatures;
placing the gain flattening filter into at least a portion of the pulse beam;
amplifying the pulse beam; and
extracting the amplified pulse beam from the amplifier.

12. The method of claim 11, further including the step of adjusting the gain material temperature to improve the performance of the optimized filter.

13. The method of claim 11, further including the step of configuring the amplifier such that the filter intersects several early passes of the pulse beam in the amplifier and bypasses several later passes.

14. The method of claim 11 wherein the gain material is Ti:sapphire and wherein the optimization step centers the gain attenuation spectrum at about 770 nm.
